# EUROPEAN PATENT APPLICATION

(11) **EP 2 775 774 A1**
(43) Date of publication of application: **10.09.2014**
(21) Application number: 12854024.2
(22) Date of filing: 24.11.2012
(51) Int. Cl.: H04W 72/12

(54) **METHOD AND APPARATUS FOR TRANSMITTING MULTIPLE SUB-FRAMES SCHEDULING SIGNALING**

(30) Priority: 30.11.2011 CN 201110390197
(71) Applicant: Huawei Technologies Co., Ltd., Shenzhen, Guangdong 518129 (CN)
(72) Inventor: GUAN, Lei, Shenzhen Guangdong 518129 (CN)
(74) Representative: Körber, Martin Hans
(86) International application number: PCT/CN2012/085222
(87) International publication number: WO 2013/078968

(57) **Abstract**

Embodiments of the present invention disclose a method and an apparatus for transmitting multi-subframe scheduling signaling, relate to the field of wireless communications technologies, and ensure correct transmission of scheduling information. The present invention includes: acquiring a first correspondence, and determining multiple hybrid automatic repeat request HARQ processes according to the first correspondence, where the first correspondence is a correspondence between process numbers of the multiple HARQ processes and an HARQ process field; generating scheduling signaling according to the first correspondence and the multiple HARQ processes; and sending the scheduling signaling and a data packet corresponding to the multiple HARQ processes scheduled by the scheduling signaling to a user equipment. The embodiments of the present invention are mainly used in a process of transmitting the multi-subframe scheduling signaling.

## Description

### CROSS-REFERENCE TO RELATED APPLICATION

This application claims priority to Chinese Patent Application No. 201110390197.0, filed with the Chinese Patent Office on November 30, 2011 and entitled "METHOD AND APPARATUS FOR TRANSMITTING MULTI-SUBFRAME SCHEDULING SIGNALING", which is incorporated herein by reference in its entirety.

### TECHNICAL FIELD

The present invention relates to the field of wireless communications technologies, and in particular to a method and an apparatus for transmitting a multi-subframe scheduling signaling.

### BACKGROUND

Currently, in an LTE (Long Term Evolution, long term evolution) system, a minimum time interval in which a base station (eNB) schedules a user equipment (UE) by using a piece of scheduling signaling is a subframe, and a piece of scheduling signaling is used to merely schedule scheduling information of a subframe. In an LTE system of a subsequently evolved version, a piece of scheduling signaling can be used to schedule scheduling information of multiple subframes; the eNB determines an idle HARQ process in sequence according to conditions fed back by the UE, of receiving an HARQ (Hybrid Automatic Repeat reQuest, hybrid automatic repeat request) (when an HARQ is received correctly, an ACK (Acknowledgement, acknowledgement character) is fed back, and when an HARQ is received incorrectly, an NAK (Negative Acknowledgement, negative acknowledgement character) is fed back)) and an HPN (HARQ Process Number, HARQ process number), generates the HPN according to the HARQ process, and then carries the HPN in the scheduling signaling and sends the scheduling signaling to the UE; after receiving the scheduling signaling, the UE determines the idle HARQ processes of the UE in sequence according to the HPN in the scheduling signaling, and correspondingly, receives channel data scheduled by the scheduling signaling.

In the above process of transmitting the multi-subframe scheduling signaling, if the eNB incorrectly detects the ACK/NAK sent by the UE, that is, if the ACK is incorrectly detected as the NAK or the NAK is incorrectly detected as the ACK, a process received and processed by the UE is inconsistent with a process sent by the eNB, and a process is incorrectly transferred; and if the eNB continues to communicate with the eNB, the error process continues to be transmitted, thereby affecting correct transmission of the scheduling information.

### SUMMARY

Embodiments of the present invention provide a method and an apparatus for transmitting multi-subframe scheduling signaling, so as to make a receiving and processing process of a UE consistent with a sending process of an eNB, thereby ensuring correct transmission of scheduling information.

In order to achieve the objective, the embodiments of the present invention adopt the following technical solutions:
A method for transmitting multi-subframe scheduling signaling, including:
   acquiring a first correspondence, and determining multiple hybrid automatic repeat request HARQ processes according to the first correspondence, where the first correspondence is a correspondence between process numbers of the multiple HARQ processes and an HARQ process field;
   generating scheduling signaling according to the first correspondence and the multiple HARQ processes; and
   sending the scheduling signaling and a data packet corresponding to the multiple HARQ processes scheduled by the scheduling signaling to a user equipment.

A method for transmitting multi-subframe scheduling signaling, including:
receiving from a base station scheduling signaling and a data packet corresponding to multiple HARQ processes scheduled by the scheduling signaling;
determining a first correspondence, where the first correspondence is a correspondence between process numbers of the multiple HARQ processes and an HARQ process field;
determining the multiple HARQ processes according to the scheduling signaling and the first correspondence; and
processing the data packet corresponding to the multiple HARQ processes according to the multiple HARQ processes.

Abase station, including:
an acquiring unit, configured to acquire a first correspondence, and determine multiple hybrid automatic repeat request HARQ processes according to the first correspondence, where the first correspondence is a correspondence between process numbers of the multiple HARQ processes and an HARQ process field;
a generation unit, configured to generate scheduling signaling according to the first correspondence acquired by the acquiring unit and the multiple HARQ processes; and
a sending unit, configured to send the scheduling signaling generated by the generation unit and a data packet corresponding to the multiple HARQ processes scheduled by the scheduling signaling to a user equipment.

A user equipment, including:
a receiving unit, configured to receive from a base station scheduling signaling and a data packet corresponding to multiple HARQ processes scheduled by the scheduling signaling;
a first determination unit, configured to determine a first correspondence, where the first correspondence is a correspondence between process numbers of the multiple HARQ processes and an HARQ process field;
a second determination unit, configured to determine the multiple HARQ processes according to the scheduling signaling received by the receiving unit and the first correspondence; and
a processing unit, configured to process the data packet corresponding to the multiple HARQ processes according to the multiple HARQ processes determined by the second determination unit.

According to the methods and the apparatus for transmitting multi-subframe scheduling signaling provided in the embodiments of the present invention, a base station acquires a first correspondence, determines multiple HARQ processes according to the first correspondence, generates scheduling signaling according to the first correspondence and the multiple HARQ processes, and sends the scheduling signaling and channel data scheduled by the scheduling signaling to a user equipment; the user equipment receives from the base station the scheduling signaling and the channel data scheduled by the scheduling signaling, determines the first correspondence according to the scheduling signaling and a preset correspondence, finds multiple HARQ processes according to the scheduling signaling and the first correspondence, and processes the channel data according to the multiple HARQ processes, so that the user equipment can accurately acquire processes used when the base station schedules the channel data, thereby ensuring correct transmission of scheduling information.

### BRIEF DESCRIPTION OF DRAWINGS

To illustrate the technical solutions according to the embodiments of the present invention or in the prior art more clearly, the following briefly introduces accompanying drawings required for describing the embodiments or the prior art. Apparently, the accompanying drawings in the following descriptions merely show some of the embodiments of the present invention, and persons of ordinary skill in the art can obtain other drawings according to the accompanying drawings without creative efforts.
FIG. 1 is a flow chart of a method for transmitting multi-subframe scheduling signaling according to Embodiment 1 of the present invention;
FIG. 2 is a flow chart of another method for transmitting multi-subframe scheduling signaling according to Embodiment 1 of the present invention;
FIG. 3 is a flow chart of a method for transmitting multi-subframe scheduling signaling according to Embodiment 2 of the present invention;
FIG. 4 is a flow chart of another method for transmitting multi-subframe scheduling signaling according to Embodiment 2 of the present invention;
FIG. 5 is a flow chart of another method for transmitting multi-subframe scheduling signaling according to Embodiment 2 of the present invention;
FIG. 6 is a flow chart of another method for transmitting multi-subframe scheduling signaling according to Embodiment 2 of the present invention;
FIG. 7 is a flowchart of a method for storing channel data according to Embodiment 2 of the present invention;
FIG. 8 is a formation block diagram of a base station according to Embodiment 3 of the present invention;
FIG. 9 is a formation block diagram of another base station according to Embodiment 3 of the present invention;
FIG. 10 is a formation block diagram of another base station according to Embodiment 3 of the present invention;
FIG. 11 is a formation block diagram of another base station according to Embodiment 3 of the present invention;
FIG. 12 is a formation block diagram of a user equipment according to Embodiment 3 of the present invention;
FIG. 13 is a formation block diagram of another user equipment according to Embodiment 3 of the present invention;
FIG. 14 is a formation block diagram of another user equipment according to Embodiment 3 of the present invention;
FIG. 15 is a formation block diagram of another user equipment according to Embodiment 3 of the present invention; and
FIG. 16 is a formation block diagram of a system for transmitting multi-subframe scheduling signaling according to Embodiment 3 of the present invention.

### DESCRIPTION OF EMBODIMENTS

The technical solutions of the present invention will be clearly described in the following with reference to the accompanying drawings. It is obvious that the embodiments to be described are only a part rather than all of the embodiments of the present invention. All other embodiments obtained by persons of ordinary skill in the art based on the embodiments of the present invention without creative efforts shall fall within the protection scope of the present invention.

### Embodiment 1

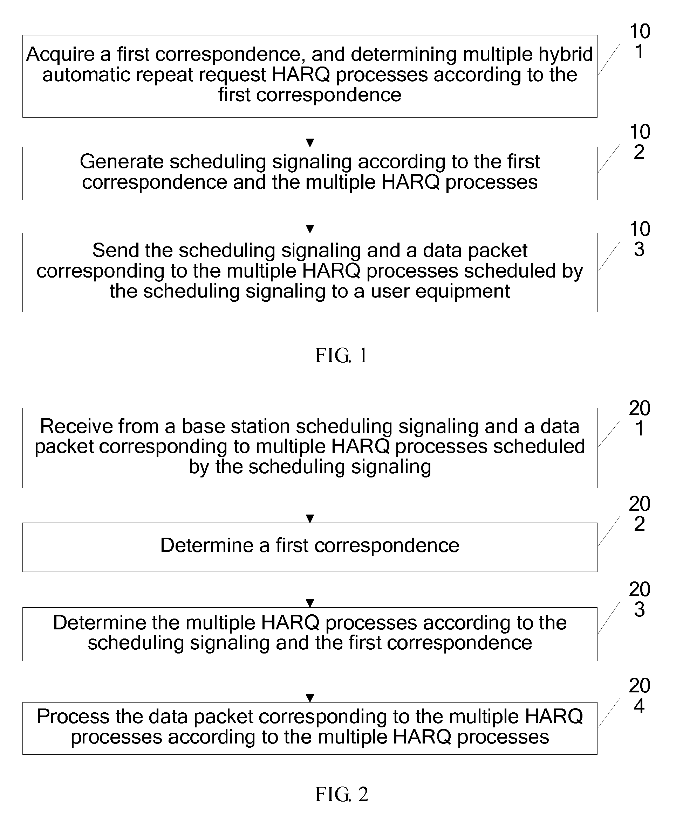

An embodiment of the present invention provides a method for transmitting multi-subframe scheduling signaling, and the method is a method implemented at a base station side. As shown in FIG. 1, the method includes:
101: Acquire a first correspondence, and determine multiple hybrid automatic repeat request HARQ processes according to the first correspondence, where the first correspondence is a correspondence between process numbers of the multiple HARQ processes and an HARQ process field.
102: Generate scheduling signaling according to the first correspondence and the multiple HARQ processes.
103: Send the scheduling signaling and a data packet corresponding to the multiple HARQ processes scheduled by the scheduling signaling to a user equipment.

An embodiment of the present invention provides a method for transmitting multi-subframe scheduling signaling, and the method is a method implemented at a user equipment side. As shown in FIG. 2, the method includes:
201: Receive from a base station scheduling signaling and a data packet corresponding to multiple HARQ processes scheduled by the scheduling signaling.
202: Determine a first correspondence, where the first correspondence is a correspondence between process numbers of the multiple HARQ processes and an HARQ process field.
203: Determine the multiple HARQ processes according to the scheduling signaling and the first correspondence.
204: Process the data packet corresponding to the multiple HARQ processes according to the multiple HARQ processes.

According to the methods for transmitting multi-subframe scheduling signaling provided in the embodiments of the present invention, a base station acquires a first correspondence, determines multiple HARQ processes according to the first correspondence, generates scheduling signaling according to the first correspondence and the multiple HARQ processes, and sends the scheduling signaling and channel data scheduled by the scheduling signaling to a user equipment; the user equipment receives from the base station the scheduling signaling and the channel data scheduled by the scheduling signaling, determines the first correspondence according to the scheduling signaling and a preset correspondence, finds multiple HARQ processes according to the scheduling signaling and the first correspondence, and processes the channel data according to the multiple HARQ processes, so that the user equipment can accurately acquire processes used when the base station schedules the channel data, thereby ensuring correct transmission of scheduling information.

### Embodiment 2

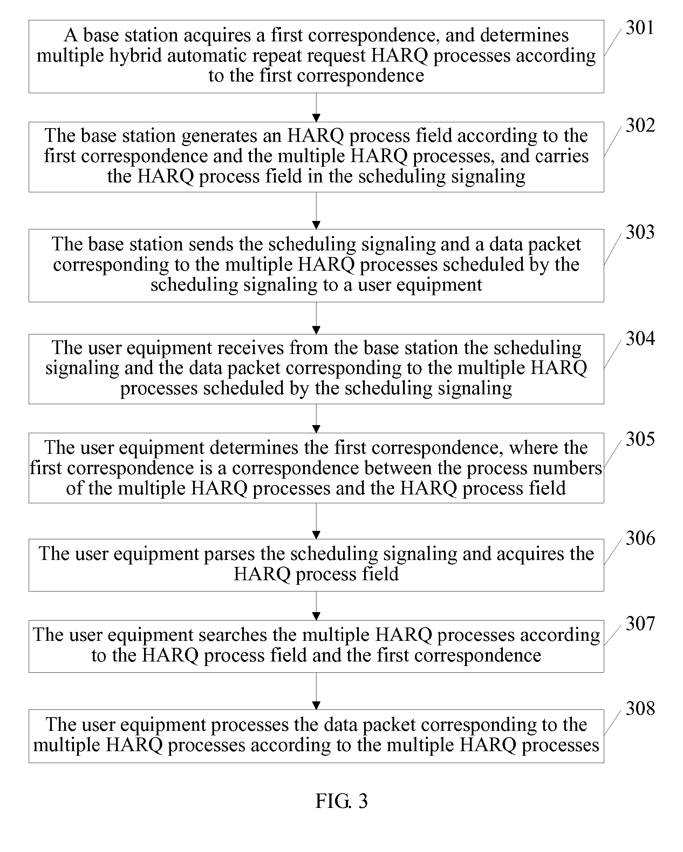

A method for transmitting multi-subframe scheduling signaling according to an embodiment of the present invention is further described in the following through a specific example. In this embodiment, a unique correspondence is preset in a base station. As shown in FIG. 3, the method includes:
301: The base station acquires a first correspondence, and determines multiple hybrid automatic repeat request HARQ processes according to the first correspondence.

In this embodiment, the first correspondence is a preset unique correspondence and is a correspondence between process numbers of multiple HARQ processes and an HARQ process field. For example, the preset correspondence may be presented in a form of the HARQ process field. Detailed description is made through a preset correspondence used when two subframes are scheduled, and the specific form is as follows: {HPN, HPN+2}, where the HPN and the HPN+2 are used to indicate a relationship between the HARQ process field and process numbers of two HARQ processes of the two subframes to be scheduled; if the HPN is 000, the first correspondence is {000, 010} and process numbers of the HARQ processes acquired through the preset correspondence are 0 and 2. Details are not repeated in this embodiment of the present invention.

In addition, it should be noted that the correspondence preset in the base station does not relate to an ACK/NACK (receive/not receive) signal received by the base station from a user equipment, and details are not repeated in this embodiment of the present invention.
302: The base station generates the HARQ process field according to the first correspondence and the multiple HARQ processes, and carries the HARQ process field in the scheduling signaling.

The HARQ process field may be, but not limited to, a multi-digit binary number. For example, the HARQ process field is 000. The setting may be performed by the user according to actual requirements, and details are not repeated in this embodiment of the present invention.
303: The base station sends the scheduling signaling and a data packet corresponding to the multiple HARQ processes scheduled by the scheduling signaling to the user equipment.
304: The user equipment receives from the base station the scheduling signaling and the data packet corresponding to the multiple HARQ processes scheduled by the scheduling signaling.
305: The user equipment determines the first correspondence, where the first correspondence is a correspondence between the process numbers of the multiple HARQ processes and the HARQ process field.

In this embodiment, since the preset correspondence is a unique correspondence, the first correspondence is the preset unique correspondence. For example, if the unique correspondence {HPN, HPN+2} is preset in the base station, it is certain that the unique correspondence {HPN, HPN+2} is synchronously stored in the user equipment. The user equipment may synchronize with the base station by presetting the unique correspondence and details are not provided herein.
306: The user equipment parses the scheduling signaling and acquires the HARQ process field.
307: The user equipment finds the multiple HARQ processes according to the HARQ process field and the first correspondence.
308: The user equipment processes the data packet corresponding to the multiple HARQ processes according to the multiple HARQ processes.

In this embodiment, a base station generates an HARQ process field according to a first correspondence, carries the HARQ process field in scheduling signaling and sends the scheduling signaling to a user equipment; the user equipment finds HARQ processes scheduled by the scheduling signaling of the base station according to the HARQ process field and the first correspondence; and a setting of the HARQ process field allows consistency of identification performed by the base station and the user equipment on the HARQ processes, thereby ensuring transmission of channel data.

### Embodiment 3

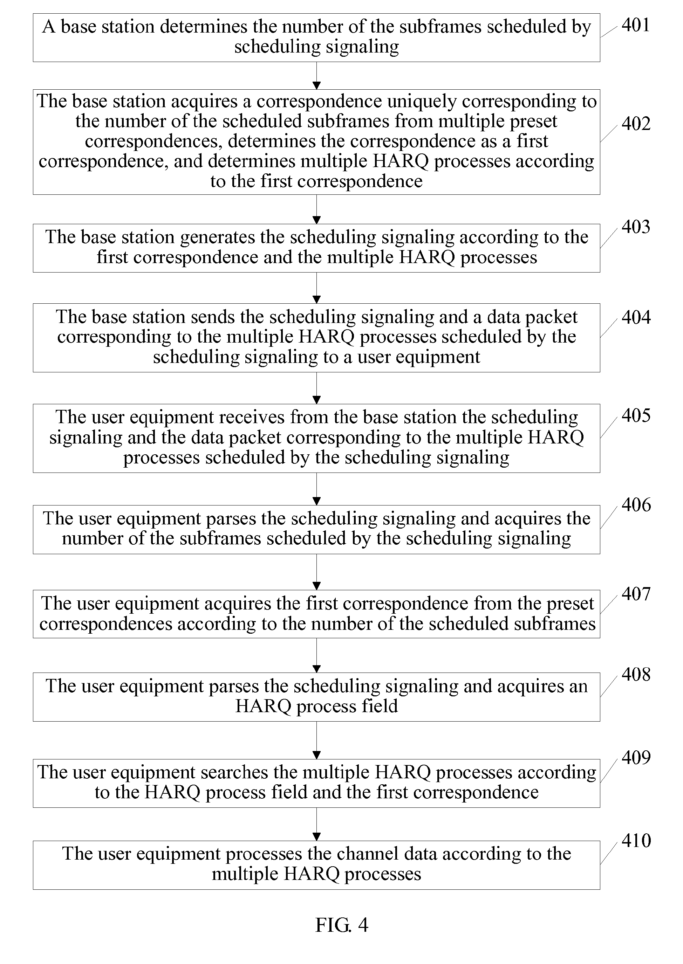

A method for transmitting multi-subframe scheduling signaling according to an embodiment of the present invention is further described in the following through a specific example. In this embodiment, multiple correspondences are preset in a base station, and the number of scheduled subframes corresponding to each correspondence is different. As shown in FIG. 4, the method includes:
401: The base station determines the number of the subframes scheduled by scheduling signaling.

The determining, by the base station, the number of the subframes scheduled by the scheduling signaling may, but is not limited to, be implemented by using the following mode, and the implementation mode specifically includes:
acquiring, by the base station, conditions of processes used by a user equipment, determining the number of the scheduled processes according to idle processes not used by the user equipment, and determining the number of the scheduled subframes according to the number of the scheduled processes. Details are not repeated in this embodiment of the present invention.

402: The base station acquires a correspondence uniquely corresponding to the number of the scheduled subframes from the multiple preset correspondences, determines the correspondence as a first correspondence, and determines multiple HARQ processes according to the first correspondence.

It should be noted that the correspondence uniquely corresponding to the number of the scheduled subframes may, but is not limited to, be implemented by using the following mode, where an HARQ process field is indicated as an HPN; the implementation mode is specifically as follows:
if the number of the subframes is 2, the correspondence is {HPN, HPN+1}, and if the HPN is 000, the correspondence is {000,001}, so process numbers of the HARQ processes acquired through the correspondence are 0 and 1;
if the number of the subframes is 3, the correspondence is {HPN, HPN+1, HPN+2}, and if the HPN is 000, the correspondence is {000,001, 010}, so process numbers of the HARQ processes acquired through the correspondence are 0, 1, and 2; and
if the number of the subframes is 4, the correspondence is {HPN, HPN+2, HPN+4, HPN+6}, and if the HPN is 000, the correspondence is {000,010, 100, 110}, so process numbers of the HARQ processes acquired through the correspondence are 0, 2, 4, and 6. The setting is performed by the user according to actual requirements, and details are not repeated in this embodiment of the present invention.

403: The base station generates the scheduling signaling according to the first correspondence and the multiple HARQ processes.

The generating, by the base station, the scheduling signaling according to the first correspondence and the multiple HARQ processes may, but is not limited to, be implemented by using the following mode; the implementation mode specifically includes:
generating, by the base station, a subframe indication field and the HARQ process field according to the first correspondence and the multiple HARQ processes, and carrying the subframe indication field and the HARQ process field in the scheduling signaling, where:
   the subframe indicator may be, but not limited to, a multi-digit binary number, for example, the subframe indicator field is 00; the setting may be performed by the user according to actual requirements, and details are not repeated in this embodiment of the present invention.

404: The base station sends the scheduling signaling and a data packet corresponding to the multiple HARQ processes scheduled by the scheduling signaling to the user equipment.
405: The user equipment receives from the base station the scheduling signaling and the data packet corresponding to the multiple HARQ processes scheduled by the scheduling signaling.
406: The user equipment parses the scheduling signaling and acquires the number of the subframes scheduled by the scheduling signaling.

The parsing, by the user equipment, the scheduling signaling, and acquiring the number of the subframes scheduled by the scheduling signaling may, but is not limited to, be implemented by using the following mode; the implementation mode specifically includes: parsing, by the user equipment, the scheduling signaling, acquiring the subframe indication field, and acquiring, according to the subframe indication field, the number of the subframes scheduled by the scheduling signaling.

It should be noted that the setting of the subframe indication field and the function implementation method are the same as those described in step 402, and details are not repeated in this embodiment of the present invention.
407: The user equipment acquires the first correspondence from the preset correspondences according to the number of the scheduled subframes.

The preset correspondences are the same as the correspondences preset in the base station, and details are not repeated in this embodiment of the present invention.
408: The user equipment parses the scheduling signaling and acquires the HARQ process field.
409: The user equipment finds the multiple HARQ processes according to the HARQ process field and the first correspondence.
410: The user equipment processes the channel data according to the multiple HARQ processes.

In this embodiment, a base station generates an HARQ process field according to a first correspondence and scheduled HARQ processes, carries the HARQ process field in scheduling signaling and sends the scheduling signaling to a user equipment; the user equipment determines the HARQ processes scheduled by the scheduling signaling of the base station according to the HARQ process field and the first correspondence; and a setting of the HARQ process field allows consistency of identification performed by the base station and the user equipment on the HARQ processes, thereby ensuring transmission of channel data; moreover, the base station can perform the multi-subframe scheduling on the different numbers of the subframes, thereby decreasing scheduling restrictions.

### Embodiment 4

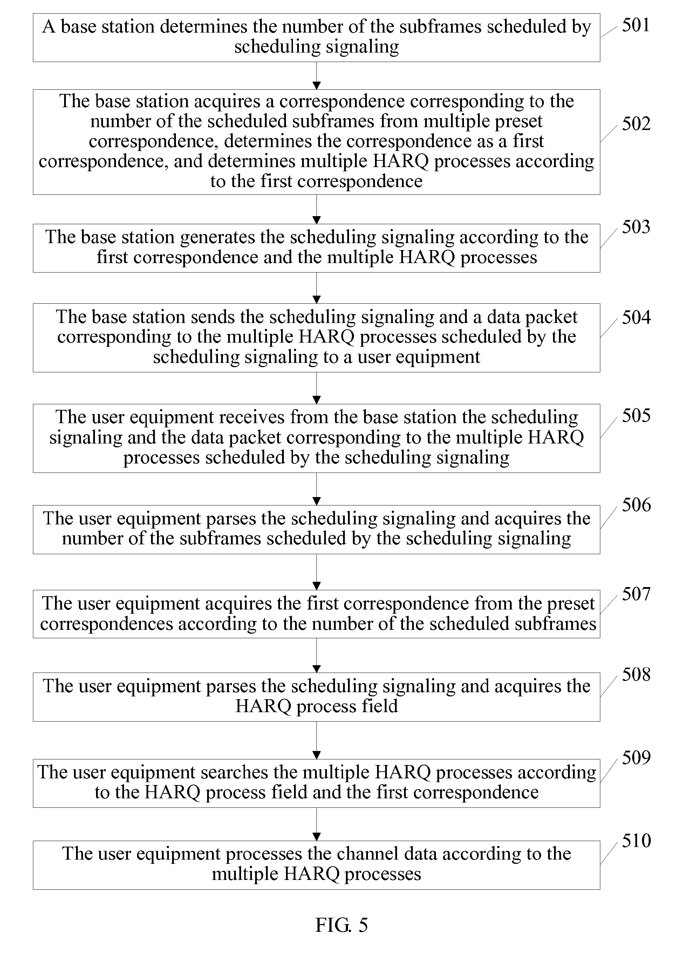

A method for transmitting multi-subframe scheduling signaling according to an embodiment of the present invention is further described in the following through a specific example. In this embodiment, multiple correspondences are preset in a base station, the number of scheduled subframes corresponding to each correspondence is different, and multiple correspondences corresponding to the same number of the subframes exist. As shown in FIG. 5, the method includes:
501: The base station determines the number of the subframes scheduled by scheduling signaling.

An implementation method of determining, by the base station, the number of the subframes scheduled by the scheduling signaling is the same as that described in step 401, and details are not repeated in this embodiment of the present invention.
502: The base station acquires a correspondence corresponding to the number of the scheduled subframes from the multiple preset correspondences, determines the correspondence as a first correspondence, and determines multiple HARQ processes according to the first correspondence.

It should be noted that the multiple correspondences corresponding to the number of the subframes scheduled by a piece of scheduling signaling sent by the base station may, but is not limited to, be implemented by using the following mode; the implementation mode is specifically as follows:
if the number of the subframes is 2, the correspondence is {HPN, HPN+1} and {HPN, HPN+2}; the setting is performed by the user according to actual requirements, and details are not repeated in this embodiment of the present invention.

503: The base station generates the scheduling signaling according to the first correspondence and the multiple HARQ processes.

The generating, by the base station, the scheduling signaling according to the first correspondence and the multiple HARQ processes may, but is not limited to, be implemented by using the following mode; the implementation mode specifically includes:
generating a subframe indication field, a correspondence indication field, and an HARQ process field according to the first correspondence and the multiple HARQ processes, where the correspondence indication field is used to indicate a user equipment to select one correspondence from the correspondences corresponding to the same number of the subframes and carry the subframe indication field, the correspondence indication field, and the HARQ process field in the scheduling signaling, where:
the correspondence indication field may be, but not limited to, a multi-digit binary number, for example, the correspondence field is 00; the setting may be performed by the user according to actual requirements, and details are not repeated in this embodiment of the present invention.

504: The base station sends the scheduling signaling and a data packet corresponding to the multiple HARQ processes scheduled by the scheduling signaling to the user equipment.
505: The user equipment receives from the base station the scheduling signaling and the data packet corresponding to the multiple HARQ processes scheduled by the scheduling signaling.
506: The user equipment parses the scheduling signaling and acquires the number of the subframes scheduled by the scheduling signaling.

An implementation method of parsing, by the user equipment, the scheduling signaling, and acquiring the number of the subframes scheduled by the scheduling signaling is the same as that described in step 406, and details are not repeated in this embodiment of the present invention.
507: The user equipment acquires the first correspondence from the preset correspondences according to the number of the scheduled subframes.

The acquiring, by the user equipment, the first correspondence from the preset correspondence according to the number of the scheduled subframes may, but is not limited to, be implemented by using the following mode; the implementation mode specifically includes:
parsing the scheduling signaling, acquiring the correspondence indication field, and determining the first correspondence from the multiple preset correspondences according to the sub frame indication field and the correspondence indication field, where:
   the setting of the correspondence indication field and the function implementation method are the same as those described in step 503, and details are not repeated in this embodiment of the present invention.

508: The user equipment parses the scheduling signaling and acquires the HARQ process field.
509: The user equipment finds the multiple HARQ processes according to the HARQ process field and the first correspondence.
510: The user equipment processes the channel data according to the multiple HARQ processes.

In this embodiment, a base station generates an HARQ process field according to a first correspondence and scheduled HARQ processes, carries the HARQ process field in scheduling signaling and sends the scheduling signaling to a user equipment; the user equipment determines the HARQ processes scheduled by the scheduling signaling of the base station according to the HARQ process field and the first correspondence; and a setting of the HARQ process field allows consistency of identification performed by the base station and the user equipment on the HARQ processes, thereby ensuring transmission of channel data; moreover, the base station can perform the multi-subframe scheduling on the different numbers of the subframes, thereby decreasing scheduling restrictions; in addition, multiple subframe scheduling methods are set for the same number of the subframes, so that the base station can perform more subframe scheduling, thereby further decreasing the scheduling restrictions.

### Embodiment 5

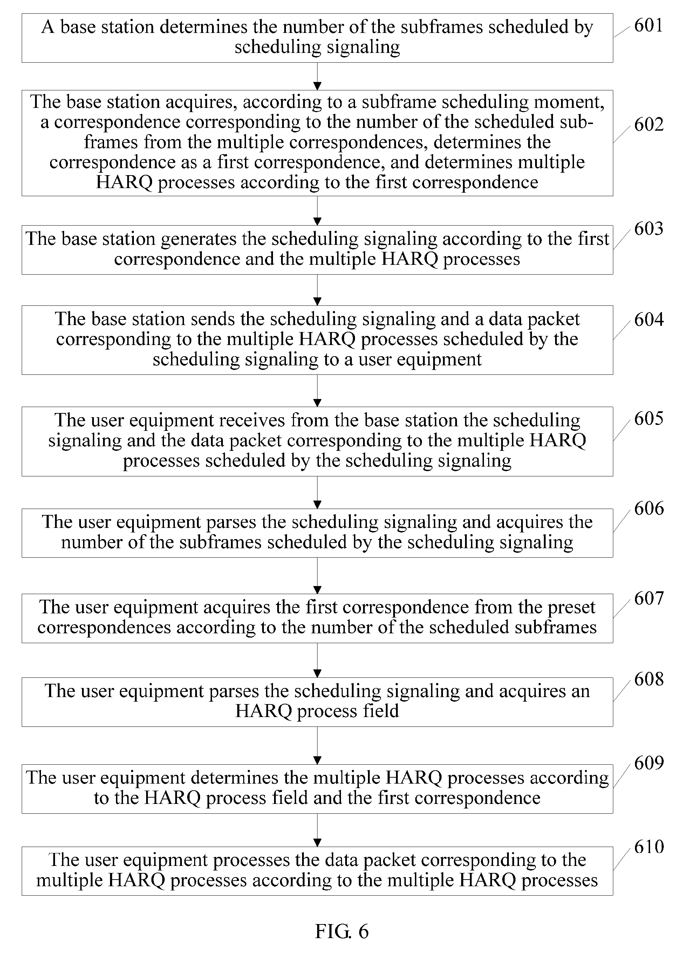

A method for transmitting multi-subframe scheduling signaling according to an embodiment of the present invention is further described in the following through a specific example. In this embodiment, multiple correspondences are preset in a base station, the number of scheduled subframes corresponding to each correspondence is different, and multiple correspondences corresponding to the same number of the subframes exist. As shown in FIG. 6, the method includes:
601: The base station determines the number of the subframes scheduled by scheduling signaling.

An implementation method of determining, by the base station, the number of the subframes scheduled by the scheduling signaling is the same as that described in step 401, and details are not repeated in this embodiment of the present invention.
602: The base station acquires, according to a subframe scheduling moment, a correspondence corresponding to the number of the scheduled subframes from the multiple correspondences, determines the correspondence as a first correspondence, and determines multiple HARQ processes according to the first correspondence.

The subframe scheduling moment can be classified according to parity. An example is taken in which two subframes are scheduled, where an HARQ process field is indicated as an HPN, the correspondence is {HPN, HPN+1} and {HPN, HPN+2}; if scheduling is performed at a subframe scheduling moment 1, the subframe scheduling moment 1 is an odd moment and the correspondence {HPN, HPN+1} is determined as the first correspondence; if the scheduling is performed at a subframe scheduling moment 2, the subframe scheduling moment 2 is an even moment and the correspondence {HPN, HPN+2} is determined as the first correspondence. Details are not repeated in this embodiment of the present invention.
603: The base station generates the scheduling signaling according to the first correspondence and the multiple HARQ processes.

An implementation method of step 603 is the same as that described in step 403, and details are not repeated in this embodiment of the present invention.
604: The base station sends the scheduling signaling and a data packet corresponding to the multiple HARQ processes scheduled by the scheduling signaling to a user equipment.
605: The user equipment receives from the base station the scheduling signaling and the data packet corresponding to the multiple HARQ processes scheduled by the scheduling signaling.
606: The user equipment parses the scheduling signaling and acquires the number of the subframes scheduled by the scheduling signaling.
607: The user equipment acquires the first correspondence from the preset correspondences according to the number of the scheduled subframes.
608: The user equipment parses the scheduling signaling and acquires the HARQ process field.
609: The user equipment determines the multiple HARQ processes according to the HARQ process field and the first correspondence.
610: The user equipment processes the data packet corresponding to the multiple HARQ processes according to the multiple HARQ processes.

In this embodiment, a base station determines and generates an HARQ process field according to a first correspondence and scheduled HARQ processes, carries the HARQ process field in scheduling signaling and sends the scheduling signaling to a user equipment; the user equipment determines the HARQ processes scheduled by the scheduling signaling of the base station according to the HARQ process field and the first correspondence; and a setting of the HARQ process field allows consistency of identification performed by the base station and the user equipment on the HARQ processes, thereby ensuring transmission of channel data; moreover, the base station can perform the multi-subframe scheduling on the different numbers of the subframes, thereby decreasing scheduling restrictions; in addition, multiple subframe scheduling methods are set for the same number of the subframes, so that the base station can perform more subframe scheduling, thereby further decreasing the scheduling restrictions.

### Embodiment 6

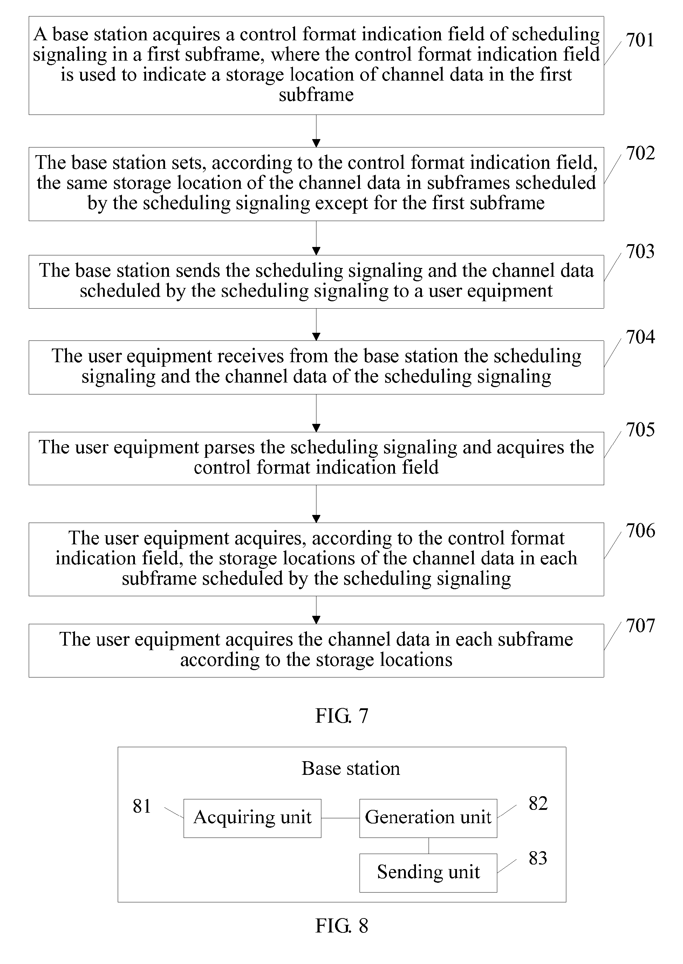

To make a user equipment accurately acquire channel data during multi-subframe scheduling, an embodiment of the present invention provides a method for storing channel data. As shown in FIG. 7, the method includes:
701: The base station acquires a control format indication field of scheduling signaling in a first subframe, where the control format indication field is used to indicate a storage location of the channel data in the first subframe.
702: The base station sets, according to the control format indication field, the same storage location of the channel data in subframes scheduled by the scheduling signaling except for the first subframe.

The setting, by the base station according to the control format indication field, the same storage location of the channel data in the subframes scheduled by the scheduling signaling except for the first subframe may, but is not limited to, be implemented by using the following mode; the implementation mode is specifically as follows:
if the control format indication field is n, the n may be 1, 2, or 3 when a bandwidth of a system is greater than 1.4 MHz; the n may be 2, 3, or 4 when the bandwidth of the system is 1.4 MHz; in this case, all the storage locations of the channel data in the subframes except for the first subframe are set to n+1. When the bandwidth of the system is greater than 1.4 MHz, all the storage locations of the channel data in the subframes except for the first subframe are set to 4. Details are not repeated in this embodiment of the present invention.

703: The base station sends the scheduling signaling and the channel data scheduled by the scheduling signaling to the user equipment.
704: The user equipment receives from the base station the scheduling signaling and the channel data of the scheduling signaling.
705: The user equipment parses the scheduling signaling and acquires the control format indication field.
706: The user equipment acquires, according to the control format indication field, the storage locations of the channel data in each subframe scheduled by the scheduling signaling.
707: The user equipment acquires the channel data in each subframe according to the storage locations.

According to the method for storing channel data provided in this embodiment of the present invention, when a base station schedules multiple subframes, storage locations of the channel data in each subframe are set in a unified manner, so that a user equipment acquires the storage locations of the channel data in the multiple subframes through the control format indication field of the scheduling signaling in the subframe, so as to correctly acquire the channel data.

### Embodiment 7

An embodiment of the present invention provides a base station, and the base station can implement a process of a method corresponding to the base station side in methods for transmitting multi-sub frame scheduling signaling shown in FIG. 1 to FIG. 7 of the present invention.

As shown in FIG. 8, the device includes an acquiring unit 81, a generation unit 82, and a sending unit 83.

The acquiring unit 81 is configured to acquire a first correspondence, and determine multiple hybrid automatic repeat request HARQ processes according to the first correspondence, where the first correspondence is a correspondence between process numbers of the multiple HARQ processes and an HARQ process field.

The generation unit 82 is configured to generate scheduling signaling according to the first correspondence acquired by the acquiring unit 81 and the multiple HARQ processes.

The sending unit 83 is configured to send the scheduling signaling generated by the generation unit 82 and a data packet corresponding to the multiple HARQ processes scheduled by the scheduling signaling to a user equipment.

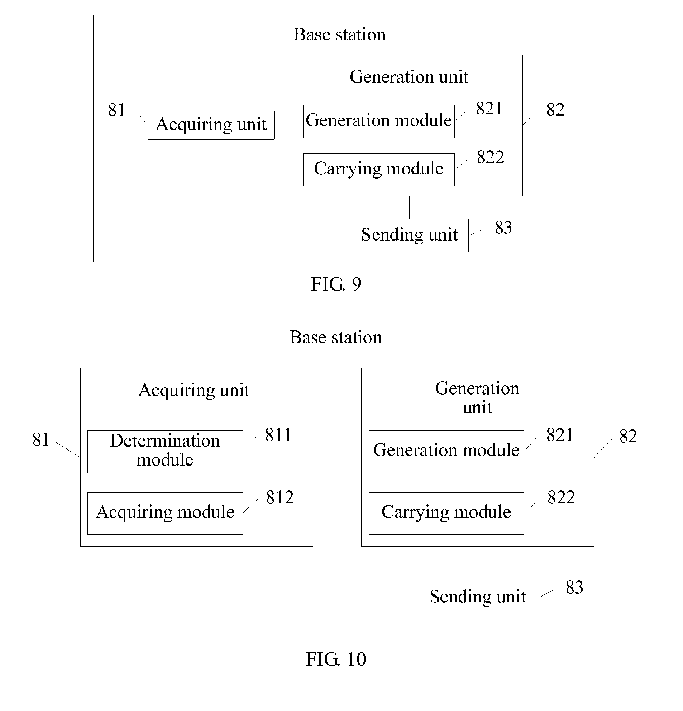

Furthermore, as shown in FIG. 9, the generation unit 82 includes a generation module 821 and a carrying module 822.

The generation module 821 is configured to generate the HARQ process field according to the first correspondence and the multiple HARQ processes.

The carrying module 822 is configured to carry the HARQ process field generated by the generation module 821 in the scheduling signaling.

Furthermore, as shown in FIG. 10, the acquiring unit 81 includes a determination module 811 and an acquiring module 812.

The determination module 811 is configured to determine the number of subframes scheduled by the scheduling signaling.

The acquiring module 812 is configured to acquire the first correspondence according to the number of the scheduled subframes determined by the determination module 811.

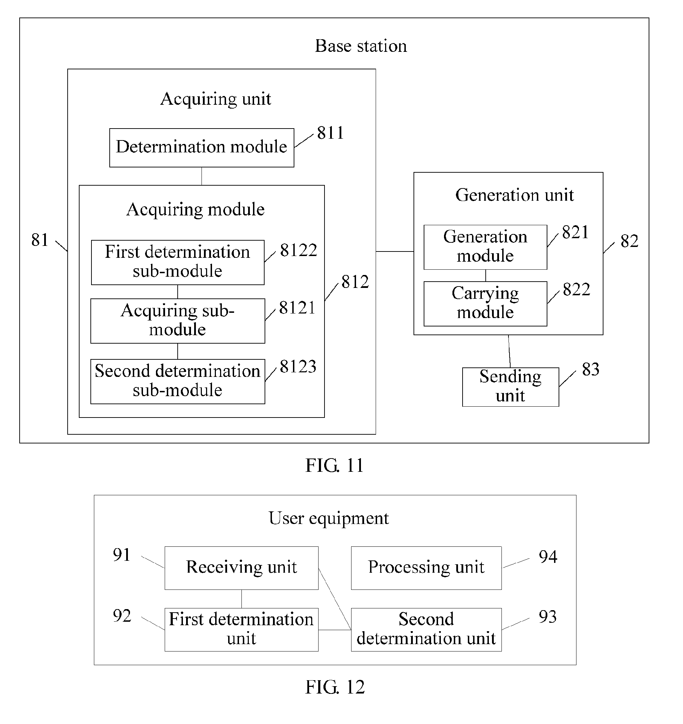

Furthermore, as shown in FIG. 11, the acquiring module 812 includes an acquiring sub-module 8121 and a first determination sub-module 8122.

The acquiring sub-module 8121 is configured to acquire a correspondence corresponding to the number of the scheduled subframes from multiple correspondences.

The first determination sub-module 8122 is configured to determine that the correspondence corresponding to the number of the scheduled subframes acquired by the acquiring sub-module 8121 is the first correspondence when the correspondence corresponding to the number of the scheduled subframes is unique.

The second determination sub-module 8123 is configured to acquire the first correspondence from the multiple correspondences corresponding to the number of the scheduled subframes and acquired by the acquiring sub-module 8121, when multiple correspondences corresponding to the number of the scheduled subframes exist.

An embodiment of the present invention provides a user equipment, and the base station may implement a process of a method corresponding to the user equipment side in methods for transmitting multi-sub frame scheduling signaling shown in FIG. 1 to FIG. 7.

As shown in FIG. 12, the device includes a receiving unit 91, a first determination unit 92, a second determination unit 93, and a processing unit 94.

The receiving unit 91 is configured to receive from a base station scheduling signaling and a data packet corresponding to multiple HARQ processes scheduled by the scheduling signaling.

The first determination unit 92 is configured to determine a first correspondence, where the first correspondence is a correspondence between process numbers of the multiple HARQ processes and an HARQ process field.

The second determination unit 93 is configured to determine the multiple HARQ processes according to the scheduling signaling received by the receiving unit 91 and the first correspondence determined by the first determination unit 92.

The processing unit 94 is configured to process the data packet corresponding to the multiple HARQ processes according to the multiple HARQ processes determined by the second determination unit 93.

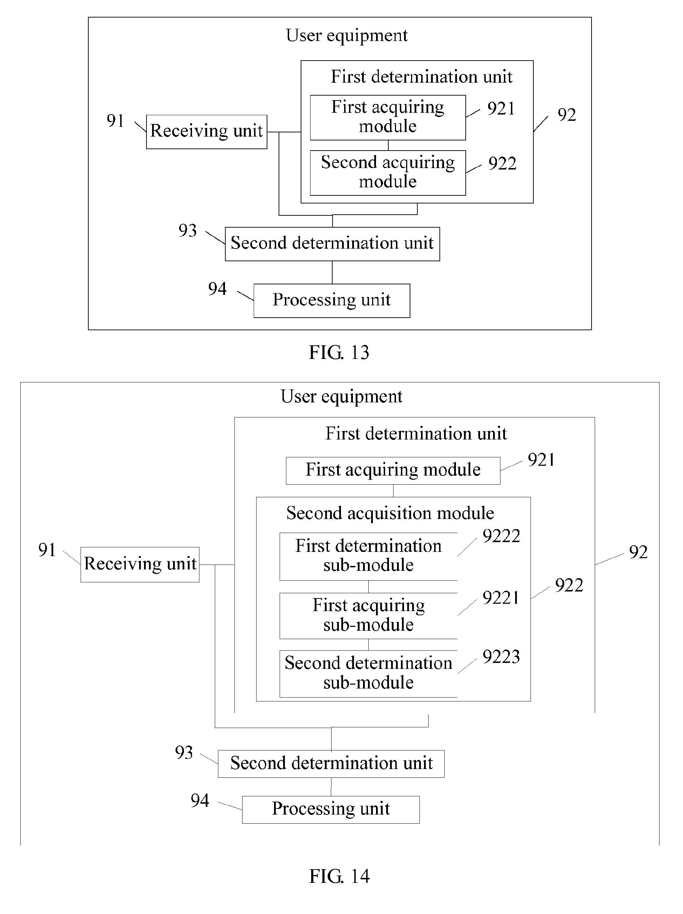

Furthermore, as shown in FIG. 13, the first determination unit 92 includes a first acquiring module 921, and a second acquiring module 922.

The first acquiring module 921 is configured to parse the scheduling signaling and acquire the number of subframes scheduled by the scheduling signaling.

The second acquiring module 922 is configured to acquire the first correspondence according to the number of the scheduled subframes acquired by the first acquiring module 921.

Furthermore, as shown in FIG. 14, the second acquiring module 922 further includes a first acquiring sub-module 9221, a first determination sub-module 9222, and a second determination sub-module 9223.

The first acquiring sub-module 9221 is configured to acquire a correspondence corresponding to the number of the scheduled subframes from a preset correspondence.

The first determination sub-module 9222 is configured to determine that the correspondence corresponding to the number of the scheduled subframes is the first correspondence when the correspondence corresponding to the number of the scheduled subframes is unique.

The second determination sub-module 9223 is configured to acquire the first correspondence from the multiple correspondences corresponding to the number of the scheduled subframes when multiple correspondences corresponding to the number of the scheduled subframes exist.

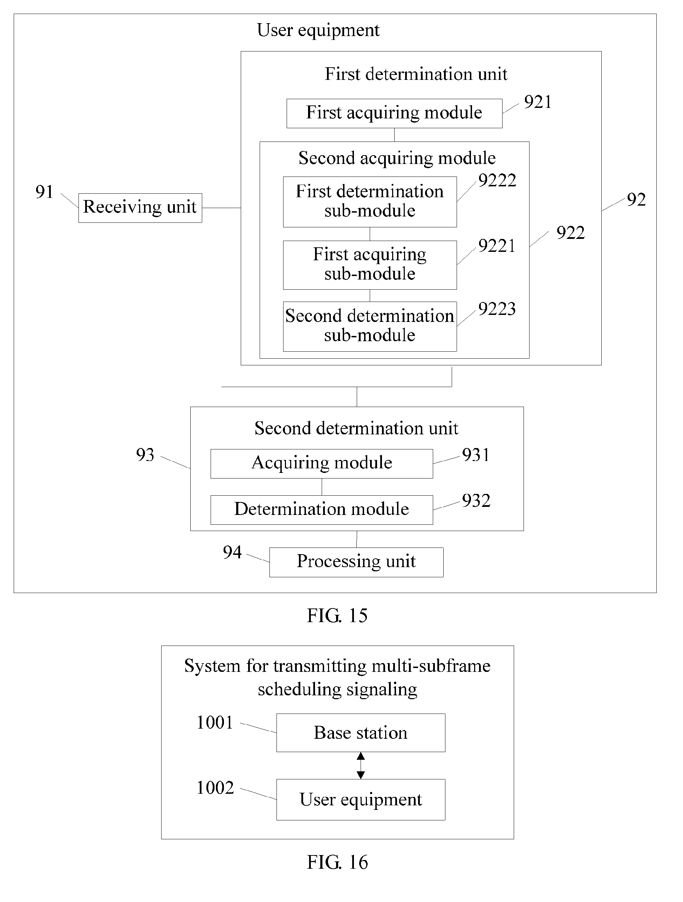

Furthermore, as shown in FIG. 15, the second determination unit 93 further includes an acquiring module 931 and a determination module 932.

The acquiring module 931 is configured to parse the scheduling signaling and acquire the HARQ process field.

The determination module 932 is configured to determine multiple HARQ processes according to the HARQ process field acquired by the acquiring module 932 and the first correspondence.

An embodiment of the present invention provides a system for transmitting multi-subframe scheduling signaling. As shown in FIG. 16, the system includes a base station 1001 and a user equipment 1002.

The base station 1001 is configured to acquire a first correspondence, determine multiple hybrid automatic repeat request HARQ processes according to the first correspondence, where the first correspondence is a correspondence between process numbers of the multiple HARQ processes and an HARQ process field, generate scheduling signaling according to the first correspondence and the multiple HARQ processes, and send the scheduling signaling and a data packet corresponding to the multiple HARQ processes scheduled by the scheduling signaling to a user equipment 1002.

The user equipment 1002 is configured to receive from the base station 1001 the scheduling signaling and the data packet corresponding to the multiple HARQ processes scheduled by the scheduling signaling, determine the first correspondence, where the first correspondence is a correspondence between the process numbers of the multiple HARQ processes and the HARQ process field, determine the multiple HARQ processes according to the scheduling signaling and the first correspondence, and process the data packet corresponding to the multiple HARQ processes according to the multiple HARQ processes.

According to the apparatus and the system for transmitting multi-subframe scheduling signaling that are provided in embodiments of the present invention, a base station generates an HARQ process field according to the first correspondence and scheduled HARQ processes, carries the HARQ process field in scheduling signaling and sends the scheduling signaling to a user equipment; the user equipment determines the HARQ processes scheduled by the scheduling signaling of the base station according to the HARQ process field and the first correspondence; and a setting of the HARQ process field allows consistency of identification performed by the base station and the user equipment on the HARQ processes, thereby ensuring transmission of channel data; moreover, the base station can perform the multi-subframe scheduling on the different numbers of the subframes, thereby decreasing scheduling restrictions; in addition, multiple subframe scheduling methods are set for the same number of the subframes, so that the base station can perform more subframe scheduling, thereby further decreasing the scheduling restrictions.

Through the foregoing description of the embodiments, it is apparent to persons skilled in the art that the present invention may be accomplished by software plus necessary universal hardware, and definitely may also be accomplished by hardware, but in most cases, the present invention is preferably implemented through the former method. Based on this, the technical solutions of the present invention or the part that makes contributions to the prior art can be substantially embodied in the form of a software product. The computer software product is stored in a readable storage medium, for example, a floppy disk, hard disk, or optical disk of the computer, and contains several instructions used to instruct a computer device (for example, a personal computer, a server, or a network device) to perform the methods according to the embodiments of the present invention.

The foregoing descriptions are merely several embodiments of the present invention, but not intended to limit the present invention. Various variations and modifications made by persons skilled in the art without departing from the spirit of the present invention fall within the scope of the present invention. Therefore, the protection scope of the present invention is subject to the appended claims.

## Claims

1. A method for transmitting multi-sub frame scheduling signaling, comprising:
acquiring a first correspondence, and determining multiple hybrid automatic repeat request HARQ processes according to the first correspondence, wherein the first correspondence is a correspondence between process numbers of the multiple HARQ processes and an HARQ process field;
generating scheduling signaling according to the first correspondence and the multiple HARQ processes; and
sending the scheduling signaling and a data packet corresponding to the multiple HARQ processes scheduled by the scheduling signaling to a user equipment.

2. The method according to claim 1, wherein if unique correspondence is preset and the unique correspondence is the first correspondence, the generating scheduling signaling according to the first correspondence and the multiple HARQ processes comprises:
generating the HARQ process field according to the first correspondence and the multiple HARQ processes, and carrying the HARQ process field in the scheduling signaling.

3. The method according to claim 1, wherein if multiple correspondences are preset, the acquiring a first correspondence comprises:
determining the number of subframes scheduled by the scheduling signaling; and
acquiring the first correspondence according to the number of the scheduled subframes.

4. The method according to claim 3, wherein the acquiring the first correspondence according to the number of the scheduled subframes comprises:
acquiring a correspondence corresponding to the number of the scheduled subframes from the multiple correspondences;
determining that the correspondence corresponding to the number of the scheduled subframes is the first correspondence if the correspondence corresponding to the number of the scheduled subframes is unique; and
acquiring the first correspondence from the multiple correspondences corresponding to the number of the scheduled subframes if multiple correspondences corresponding to the number of the scheduled subframes exist.

5. A method for transmitting multi-sub frame scheduling signaling, comprising:
receiving from a base station scheduling signaling and a data packet corresponding to multiple HARQ processes scheduled by the scheduling signaling;
determining a first correspondence, wherein the first correspondence is a correspondence between process numbers of the multiple HARQ processes and an HARQ process field;
determining the multiple HARQ processes according to the scheduling signaling and the first correspondence; and
processing the data packet corresponding to the multiple HARQ processes according to the multiple HARQ processes.

6. The method according to claim 5, wherein the determining a first correspondence comprises:
parsing the scheduling signaling, and acquiring the number of subframes scheduled by the scheduling signaling; and
acquiring the first correspondence according to the number of the scheduled subframes.

7. The method according to claim 6, wherein the acquiring the first correspondence according to the number of the scheduled subframes comprises:
acquiring the correspondence corresponding to the number of the scheduled subframes from a preset correspondence;
determining that the correspondence corresponding to the number of the scheduled subframes is the first correspondence if the correspondence corresponding to the number of the scheduled subframes is unique; and
acquiring the first correspondence from the multiple correspondences corresponding to the number of the scheduled subframes if multiple correspondences corresponding to the number of the scheduled subframes exist.

8. The method according to claim 7, wherein the preset correspondence is the same as a correspondence preset in the base station.

9. The method according to any one of claims 5 to 8, wherein the scheduling signaling comprises the HARQ process field; and the determining the multiple HARQ processes according to the scheduling signaling and the first correspondence comprises:
parsing the scheduling signaling, and acquiring the HARQ process field; and
determining the multiple HARQ processes according to the HARQ process field and the first correspondence.

10. Abase station, comprising:
an acquiring unit, configured to acquire a first correspondence, and determine multiple hybrid automatic repeat request HARQ processes according to the first correspondence, wherein the first correspondence is a correspondence between process numbers of the multiple HARQ processes and an HARQ process field;
a generation unit, configured to generate scheduling signaling according to the first correspondence acquired by the acquiring unit and the multiple HARQ processes; and
a sending unit, configured to send the scheduling signaling generated by the generation unit and a data packet corresponding to the multiple HARQ processes scheduled by the scheduling signaling to a user equipment.

11. The base station according to claim 10, wherein the generation unit comprises:
a generation module, configured to generate the HARQ process field according to the first correspondence and the multiple HARQ processes; and
a carrying module, configured to carry the HARQ process field generated by the generation module in the scheduling signaling.

12. The base station according to claim 10, wherein if multiple correspondences are preset, the acquiring unit comprises:
a determination module, configured to determine the number of subframes scheduled by the scheduling signaling; and
an acquiring module, configured to acquire the first correspondence according to the number of the scheduled subframes determined by the determination module.

13. The base station according to claim 12, wherein the acquiring module comprises:
an acquiring sub-module, configured to acquire a correspondence corresponding to the number of the scheduled subframes from the multiple correspondences;
a first determination sub-module, configured to determine that the correspondence corresponding to the number of the scheduled subframes acquired by the first acquiring sub-module is the first correspondence, when the correspondence corresponding to the number of the scheduled subframes is unique; and
a second determination sub-module, configured to acquire the first correspondence from the multiple correspondences corresponding to the number of the scheduled subframes and acquired by the acquiring sub-module, when multiple correspondences corresponding to the number of the scheduled subframes exist.

14. A user equipment, comprising:
a receiving unit, configured to receive from a base station scheduling signaling and a data packet corresponding to multiple HARQ processes scheduled by the scheduling signaling;
a first determination unit, configured to determine a first correspondence, wherein the first correspondence is a correspondence between process numbers of the multiple HARQ processes and an HARQ process field;
a second determination unit, configured to determine the multiple HARQ processes according to the scheduling signaling received by the receiving unit and the first correspondence determined by the first determination unit; and
a processing unit, configured to process the data packet corresponding to the multiple HARQ processes according to the multiple HARQ processes determined by the second determination unit.

15. The user equipment according to claim 14, wherein the first determination unit comprises:
a first acquiring module, configured to parse the scheduling signaling and acquire the number of subframes scheduled by the scheduling signaling; and
a second acquiring module, configured to acquire the first correspondence according to the number of the scheduled subframes acquired by the first acquiring module.

16. The user equipment according to claim 15, wherein the second acquiring module comprises:
a first acquiring sub-module, configured to acquire a correspondence corresponding to the number of the scheduled subframes from a preset correspondence;
a first determination sub-module, configured to determine that the correspondence corresponding to the number of the scheduled subframes is the first correspondence, when the correspondence corresponding to the number of the scheduled subframes is unique; and
a second determination sub-module, configured to acquire the first correspondence from the multiple correspondences corresponding to the number of the scheduled subframes, when multiple correspondences corresponding to the number of the scheduled subframes exist.

17. The user equipment according to any one of claims 14 to 16, wherein the second determination unit comprises:
an acquiring module, configured to parse the scheduling signaling and acquire the HARQ process field; and
a determination module, configured to determine multiple HARQ processes according to the HARQ process field acquired by the acquiring module and the first correspondence.
